# EUROPEAN PATENT APPLICATION

(11) **EP 3 885 983 A1**
(43) Date of publication of application: **29.09.2021**
(21) Application number: 21164353.1
(22) Date of filing: 23.03.2021
(51) Int. Cl.: G06K 9/00, G06K 9/62

(54) **ADDITIVE MANUFACTURING PART AUTHENTICATION SYSTEM AND METHOD**

(30) Priority: 23.03.2020 US 202016827701
(71) Applicant: Alitheon, Inc., Bellevue, WA 98004 (US)
(72) Inventor: Ross, David Justin, Bellevue, WA Washington 98004 (US); Ross, Robert Saxon, Bellevue, WA Washington 98004 (US); Qian, Cheng, Bellevue, WA Washington 98004 (US); Shannon, Will Charles, Bellevue, WA Washington 98004 (US)
(74) Representative: Dendorfer, Claus

(57) **Abstract**

A system and method for authenticating additive-manufactured parts using digital fingerprints. The additive-manufactured parts may be parts in which material is added under computer control to build up a three-dimensional object, such as using 3D printing.

## Description

### PRIORITY CLAIMS

This application claims priority to U.S. Patent Nos. 8,774, 455, 9,350,552, 9,443,298, 9,582,714, 10,043,073, 10,192,140 and 10,346,852 and U.S. Patent Application Serial Nos. 15/862,556, 16/041,710 and 16/431,131, the entirety of all of which are incorporated herein by reference.

### COPYRIGHT NOTICE

COPYRIGHT © 2018-2021 Alitheon, Inc. A portion of the disclosure of this patent document contains material which is subject to copyright protection. The copyright owner has no objection to the facsimile reproduction by anyone of the patent document or the patent disclosure, as it appears in the files or records of the European Patent Office or other national patent offices, but otherwise reserves all copyright rights whatsoever.

### FIELD

The present disclosure pertains to methods and apparatus to identify or authenticate physical objects manufactured through an additive manufacturing process.

### BACKGROUND

Many different approaches have been tried to uniquely identify and authenticate objects, including labelling and tagging strategies using serial numbers, bar codes, holographic labels, RFID tags, and hidden patterns using security inks or special fibers. All of these methods can be duplicated, and many add a substantial extra cost to the production of the goods sought to be protected. Moreover, physical labels and tags may be lost, modified, or stolen, and the physical marking of certain objects such as artwork, gemstones, and collector-grade coins may damage or destroy the value of the object.

A need remains for solutions that enable manufacturers and distributors of physical objects made through additive manufacturing processes to identify and authenticate the objects as being legitimately manufactured, including in cases where expected changes to the object have occurred in the process of manufacture or assembly. Additive manufacturing (AM) is a manufacturing process that adds material under computer control to build up a three-dimensional object and it sometimes called "3D printing." Sometimes "3D printing" is divided into "rapid prototyping" and "additive manufacturing", distinguishing its use in producing prototypes from its use in manufacturing production objects.

The 2018 market for additive manufactured items is estimated at $5 billion and growing rapidly as AM moves from experimentation and rapid prototyping to full-scale manufacturing. Many AM parts are used in critical systems such as aircraft engines, airframes, and in medical implants. This widespread use, and the lower costs of AM processes, has led to a comparable rise in counterfeiting of AM-created parts. It is desirable to be able to prevent AM parts counterfeiting. Preventing counterfeits has two major purposes: first, to ensure that those who own the designs benefit from them and second to prevent perhaps poorly-executed 3D copies of critical components having negative impact on consumers.

At the same time that the use of AM parts is expanding, AM processes are becoming more precise, faster, and cheaper. Not only can single-material parts be created by AM, but extremely complex items such as electronic components and even human skin are now being 3D printed, or soon will be. AM is to be distinguished from other manufacturing processes in that the object is built "from the ground" up by adding material where it is needed, rather than from the top down by, say, removing excess material from a block of metal (subtractive manufacturing), or all at once, such as by injection molding or stamping. The material added can be almost anything, including resin, plastics, metal, and ceramics. In many instances, elements of multiple kinds of manufacturing are combined.

**Extrusion.** This is probably the simplest (and generally cheapest) form of additive manufacturing and one often used in hobbyist approaches. It is also used in rapid prototyping and to manufacture production parts. A scanning head deposits a heated viscous fluid in a preset pattern and the material is allowed to cool. The process is continued until the item is complete.

**Powder bed.** In this process, powder is spread over a substrate and a laser fuses the powder together. Additional powder is added, and the part built up fused layer by fused layer. This relatively high-power process can be used with plastics, metals, glass particles, ceramics, and almost anything that can be fused with a scanning laser.

**Sheet Lamination.** This approach is somewhat similar to the previous. Instead of adding powder at each stage, metal sheets are added. Each sheet is joined to the previous by welding, adhesive, or other means and then a laser cuts each sheet as needed, building up the part. The sheets may be metal, paper, plastic, or almost anything that can be formed into sheets and cut by a laser.

**Photopolymerization.** This process uses photo-curable resin as the building material. The item is continuously drawn from a vat containing the resin and a scanning laser photocures it incrementally.

**Jetting.** There are (at least) two forms of this process. In one, a powder is spread and then a layer of adhesive added. Powder and adhesive are added alternatively until the part is completed. Almost any material that can be turned into a powder is suitable for this approach, including glass, ceramics, plastics, and metal. Another jetting approach applies a layer of liquid, allows it to dry, harden, or cure (e.g. under UV light), and continues the process to complete the part. Photopolymers are among the suitable materials for this approach. This is closely related to the extrusion method discussed above.

There is a need to be able to authenticate all of these types of additive-manufactured parts and it is to this end that the disclosure is directed.

### BRIEF DESCRIPTION OF THE DRAWINGS

In order to describe the manner in which the above-recited and other advantages and features of the disclosure can be obtained, a more particular description follows by reference to the specific embodiments thereof which are illustrated in the appended drawings. Understanding that these drawings depict only typical embodiments of the present disclosure and are not therefore to be considered to be limiting of its scope, the present disclosure will be described and explained with additional specificity and detail through the use of the accompanying drawings in which:
Fig. 1 is a simplified conceptual diagram of one example of a computer-implemented authentication system consistent with the present disclosure.
Fig. 2 is a simplified block diagram of another example of a computer-implemented authentication system consistent with the present disclosure.
Fig. 3 is a simplified flow diagram illustrating a method for creating a storing a digital fingerprint of an object in a database.
Fig. 4 illustrates a process that includes more robust feature extraction.
Fig. 5 is a simplified flow diagram illustrating a method for matching a digital fingerprint of a target object to a database of existing digital fingerprints.
Figs. 6A and 6B illustrate an object made by additive manufacturing where the object has features that occur as a result of the manufacturing process but that are unintended and essentially impossible to duplicate by a counterfeiter.

### DETAILED DESCRIPTION OF ONE OR MORE EMBODIMENTS

The disclosure is particularly applicable to a system and method for authenticating an additive-manufactured part using the digital fingerprints generated by Alitheon, Inc. and it is in this context that the disclosure will be described. It will be appreciated, however, that the system and method has greater utility since the authentication may be performed using different digital fingerprints that are within the scope of this disclosure. Furthermore, the disclosed system and method can be used for both additive manufacturing and rapid prototyping. However, the issue of counterfeiting is generally more pressing in the field of production objects. Thus, an example of preventing counterfeiting by authenticating an object using digital fingerprinting is frequently employed, but it should be understood that the teachings of this disclosure apply to *any* use of digital fingerprinting in an additive manufacturing process, whether to capture features for later authentication or identification, determining and repairing defects, detect alterations of the object, or determining and repairing wear and tear on the object.

The disclosed system and method may detect whether an additive manufactured (AM) part is authentic as described below in which a digital fingerprinting matching process is employed that uses a threshold of similarity between the digital fingerprints. Depending on the threshold chosen for the matching process, the disclosed system and method can also determine from the digital fingerprints of two objects (such as a first object and target object) that the target object is the first object that has been modified by an expected change such that the match difference does not exceed the threshold or that the target object is the first object that has been modified by an unexpected change such that the match difference exceeds the threshold. In some embodiments, the expected change may be wear and tear on the first object.

"Digital fingerprinting" refers to the creation and use of digital records (digital fingerprints) derived from properties of a physical object, which digital records are typically stored in a database. Digital fingerprints may be used to reliably and unambiguously identify or authenticate corresponding physical objects, track them through supply chains, record their provenance and changes over time, and for many other uses and applications.

Digital fingerprints store information, preferably in the form of numbers or "feature vectors," that describes features that appear at particular locations, called points of interest, of a two-dimensional (2-D) or three-dimensional (3-D) object. In the case of a 2-D object, the points of interest are preferably on a surface of the corresponding object; in the 3-D case, the points of interest may be on the surface or in the interior of the object. In some applications, an object "feature template" may be used to define locations or regions of interest for a class of objects. The digital fingerprints may be derived or generated from digital data of the object which may be, for example, image data.

While the data from which digital fingerprints are derived is often images, a digital fingerprint may contain digital representations of any data derived from or associated with the object. For example, digital fingerprint data may be derived from an audio file. That audio file in turn may be associated or linked in a database to an object. Thus, in general, a digital fingerprint may be derived from a first object directly, or it may be derived from a different object (or file) linked to the first object, or a combination of the two (or more) sources. In the audio example, the audio file may be a recording of a person speaking a particular phrase. The digital fingerprint of the audio recording may be stored as part of a digital fingerprint of the person speaking. The digital fingerprint (of the person) may be used as part of a system and method to later identify or authenticate that person, based on their speaking the same phrase, in combination with other sources.

Returning to the 2-D and 3-D object examples mentioned above, feature extraction or feature detection may be used to characterize points of interest. In an embodiment, this may be done in various ways. Two examples include Scale-Invariant Feature Transform (or SIFT) and Speeded Up Robust features (or SURF). Both are described in the literature. For example: "Feature detection and matching are used in image registration, object tracking, object retrieval etc. There are number of approaches used to detect and matching of features as SIFT (Scale Invariant Feature Transform), SURF (Speeded up Robust Feature), FAST, ORB etc. SIFT and SURF are most useful approaches to detect and matching of features because of it is invariant to scale, rotate, translation, illumination, and blur." MISTRY, Darshana et al., Comparison of Feature Detection and Matching Approaches: SIFT and SURF, GRD Journals- Global Research and Development Journal for Engineering | Volume 2 | Issue 4 | March 2017.

In an embodiment, features may be used to represent information derived from a digital image in a machine-readable and useful way. Features may comprise point, line, edges, blob of an image, etc. There are areas as image registration, object tracking, and object retrieval etc. that require a system or processor to detect and match correct features. Therefore, it may be desirable to find features in ways that are invariant to rotation, scale, translation, illumination, and/or noisy and blurred images. The search of interest points from one object image to corresponding images can be very challenging work. The search may preferably be done such that the same physical interest points may be found in different views. Once located, points of interest and their respective characteristics may be aggregated to form a digital fingerprint (generally including 2-D or 3-D location parameters).

In an embodiment, features may be matched, for example, based on finding a minimum threshold distance. Distances can be found using Euclidean distance, Manhattan distance, etc. If distances of two points are less than a prescribed minimum threshold distance, those key points may be known as matching pairs. Matching a digital fingerprint may comprise assessing a number of matching pairs, their locations, distance, or other characteristics. Many points may be assessed to calculate a likelihood of a match, since, generally, a perfect match will not be found. In some applications a "feature template" may be used to define locations or regions of interest for a class of objects.

In this disclosure, the term "scan" is used in the broadest sense, referring to any and all means for capturing an image or set of images, which may be in digital form or transformed into digital form. Images may, for example, be two dimensional, three dimensional, or in the form of a video. Thus a "scan" may refer to an image (or digital data that defines an image) captured by a scanner, a camera, a specially adapted sensor or sensor array (such as a CCD array), a microscope, a smartphone camera, a video camera, an x-ray machine, a sonar, an ultrasound machine, a microphone (or other instruments for converting sound waves into electrical energy variations), etc. Broadly, any device that can sense and capture either electromagnetic radiation or mechanical wave that has traveled through an object or reflected off an object or any other means to capture surface or internal structure of an object is a candidate to create a "scan" of an object. Various means to extract "fingerprints" or features from an object may be used; for example, through sound, physical structure, chemical composition, or many others. The remainder of this application will use terms like "image" but when doing so, the broader uses of this technology should be implied. In other words, alternative means to extract "fingerprints" or features from an object should be considered equivalents within the scope of this disclosure. Similarly, terms such as "scanner" and "scanning equipment" herein may be used in a broad sense to refer to any equipment capable of carrying out "scans" as defined above, or to equipment that carries out "scans" as defined above as part of their function.

Different forms of the words "authenticate" and "authentication" will be used broadly to describe both authentication and attempts to authenticate which comprise creating a digital fingerprint of the object. Therefore, "authentication" is not limited to specifically describing successful matching of inducted objects or generally describing the outcome of attempted authentications. As one example, a counterfeit object may be described as "authenticated" even if the "authentication" fails to return a matching result. In another example, in cases where unknown objects are "authenticated" without resulting in a match and the authentication attempt is entered into a database for subsequent reference the action described as "authentication" or "attempted authentication" may also, *post facto,* also be properly described as an "induction". An authentication of an object may refer to the induction or authentication of an entire object or of a portion of an object. More information about digital fingerprinting is set forth below and can be found in various patents and publications assigned to Alitheon, Inc. including, for example, the following: DIGITAL FINGERPRINTING, U.S. Pat. No. 8,774,455; OBJECT IDENTIFICATION AND INVENTORY MANAGEMENT, U.S. Pat. No. 9,152,862; DIGITAL FINGERPRINTING OBJECT AUTHENTICATION AND ANTI-COUNTERFEITING SYSTEM, U.S. Pat. No. 9,443,298; PERSONAL HISTORY IN TRACK AND TRACE SYSTEM, U.S. Pat. No. 10,037,537; PRESERVING AUTHENTICATION UNDER ITEM CHANGE, U.S. Pat. No. 10,346,852 that are all incorporated herein by reference.

### Additive Manufacturing Object Authentication

The above digital fingerprinting, scanning and authentication may be used to authenticate items made through additive manufacturing (AM) processes. For the purposes of this disclosure, an AM process is one in which, at significant stages in the manufacturing of the object (here, the words "item" and "object" are used interchangeably), the object's surface is added to in some substantial way. Also, the digital fingerprinting, scanning and authentication may be used as part of an AM repair process where the teachings of this disclosure may be used to detect the need for repair, judge the effectiveness of the repair, reinduct a changed surface, detect nefarious modifications of an object, and more. "Induction" generally refers to generating a digital fingerprint of an object and storing a record of the object, including the digital fingerprint, in a digital data store.

The distinctions between AM processes and standard machining techniques may not always be clear, since during an AM cycle, material may be added and then some of it machined away and, in some cases, there may be AM additions to already-machined parts. The techniques disclosed for authenticating AM-produced objects are very similar to those used to authenticate any object from its surface characteristics. The teachings below of this disclosure apply to all forms of AM and all forms where part of an object is made with AM as well as where AM is used to make repairs or modifications on an existing object.

The system and method for authenticating additive manufactured parts may be used, for example, to prevent counterfeiting of AM parts. For example, if a bad actor has a capable 3D printer and steals or otherwise wrongfully procures driver files for additively manufacturing a physical object, and has access to the raw materials, that bad actor may then have the ability to manufacture counterfeit objects which are functionally equivalent to the original, non-counterfeit objects. Indeed, absent techniques such as are taught in this disclosure, it may be very difficult or even impossible to distinguish such counterfeit objects from legitimate items. In addition, the equipment needed for additive manufacturing, such as printers and raw materials, may generally be acquired with much less difficulty and cost than high-end machining tools, which may further incentivize would-be counterfeiters.

The emergence of additive manufacturing means that current approaches for authenticating machined parts, such as having experts determine whether the item contains all the features of a legitimate object (similar to when a numismatic expert distinguishes a counterfeit gold sovereign coin from an authentic gold sovereign), will not work in cases where the counterfeits may be indistinguishable in any class-based way from legitimate objects. In such cases, the only way to distinguish a legitimate item accurately may be to determine, as is taught in this disclosure, that the particular object was made under legitimate circumstances.

The problem of additive manufacturing of counterfeit goods resembles a non-additive (subtractive) manufacturing situation for which some of the teachings of this disclosure also provide a solution, namely, that of "gray market" goods, which are authentic goods traded legally via distribution channels unintended by the manufacturer or original distributors. In the current case, additive manufactured goods that were made by the use of stolen print file may fall within the range of acceptable goods and can only be distinguished from legitimately-produced goods by the teachings of this disclosure. In the gray market case, the goods *are* legitimately produced but have been diverted from their intended destination (e.g. medicines shipped to Mexico that end up back in the US where they can be sold for more money). In both cases (though for different reasons), the object is indistinguishable by current means from legitimate objects and in both cases the teachings of this disclosure provide a way to accurately distinguish them from legitimately-produced inducted goods.

In this disclosure, where "surface" features may be described as being digitally fingerprinted, any other methods that find and characterize accidental or random features of an object (whether on the surface or inside) and use those in a digital fingerprint to later identify or authenticate the object are in view. It is understood that characterizing features of an object may, if the object is transparent to at least some form of radiation or sound, be internal to the object. Similarly, though examples will generally be provided in which the digital fingerprints are acquired optically in visible light, it should be understood that *all* methods of acquiring such data (e.g. by sound, X-rays, infrared radiation) are in view.

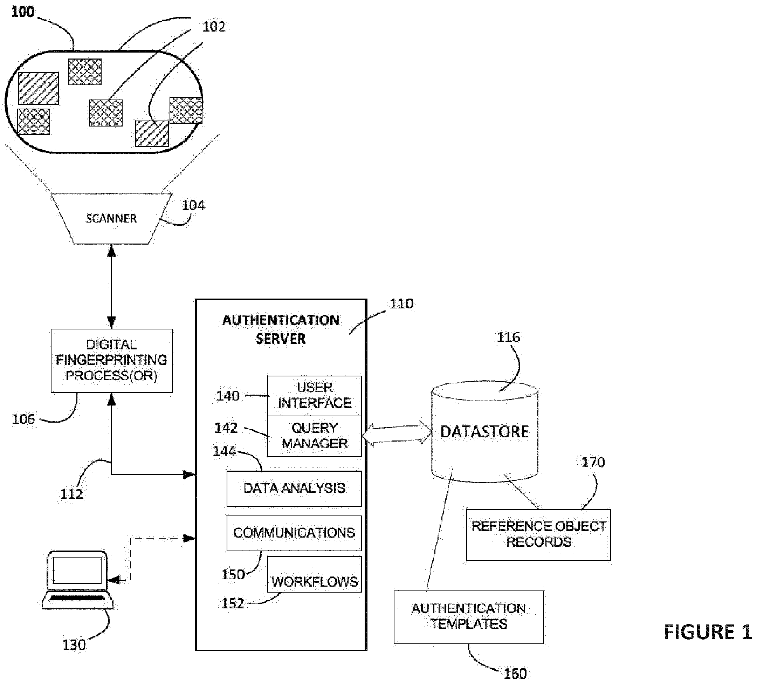

FIG. 1 is a simplified block diagram of one example of a computer-implemented authentication system consistent with the present disclosure that may be used to authenticate an additive manufactured object/part 100 that has regions including regions 102. The object may be scanned by a scanner 104 to capture image data, and the image data processed, block 106, to form digital fingerprints of each region. The scanning and digital fingerprinting are described in more detail later. The image data and the one or more digital fingerprints may be input to an authentication server 110 via a network or other communication link 112. In some embodiments, the authentication server 110 may incorporate hardware and software to implement a user interface 140, a query manager 142, a communications module 150 and various other workflows 152. In an embodiment, the server may host data analysis software 144.

The system may have a datastore 116 that may be coupled to the authentication server 110 for communications with the query manager 142 for finding, reading and writing data to the datastore 116. A computer, terminal or similar apparatus 130 may enable a user to communicate with the authentication server (for example, via user interface 140) to manage or request authentication operations, store and modify data such as templates, and receive authentication result messages. The datastore 116 preferably stores, inter alia, reference object records 170 and authentication templates 160. Reference objects are physical objects which have been previously "inducted" into the datastore, meaning that corresponding records are stored therein, the reference record for an object comprising various data including digital fingerprints for selected regions of the reference object. Other information associated with a region is described below.

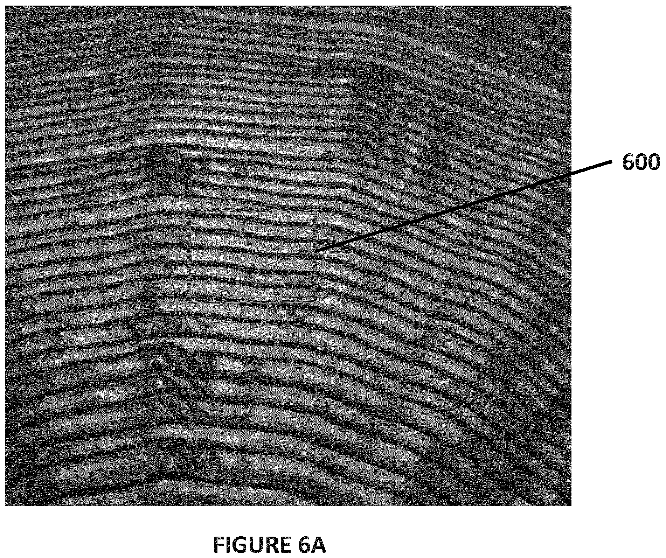

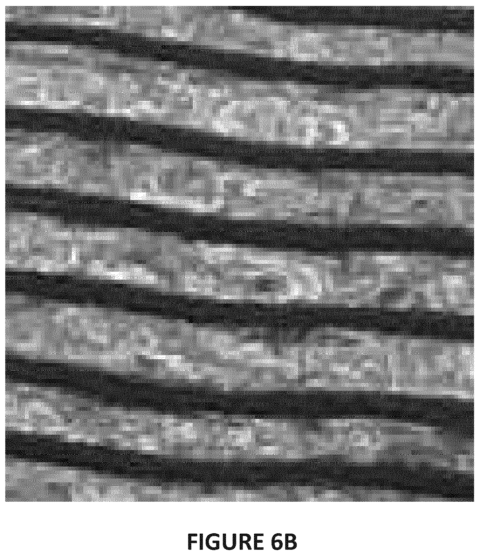

The system shown in Figure 1 may be used to authenticate additive manufactured objects and parts using the various types of additive manufacturing described above. An example of an additive manufactured part and the innate features used in its authentication are shown in Figures 6A and 6B. As described above, counterfeiting of additive manufactured goods/products are a significant technical problem that cannot be solved by typical systems and methods that use QR code, a tag, etc. attached to the part as described above.

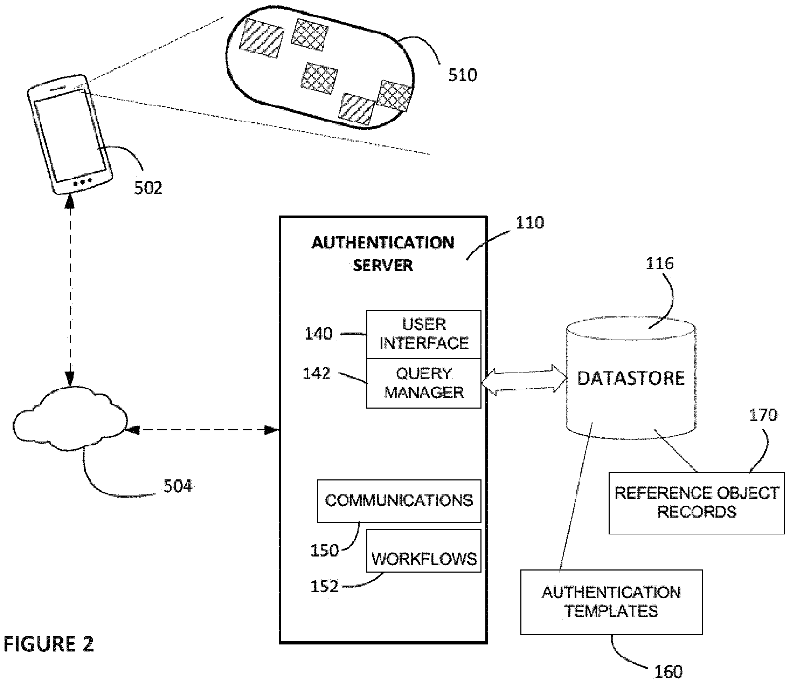

FIG. 2 is a simplified diagram of another example of a computer-implemented authentication system consistent with the present disclosure that may be used to authenticate additive manufactured parts/objects 510. In this embodiment, the authentication server 110 and associated datastore may be generally the same as previously described with regard to Fig. 1. In this embodiment, a smart phone 502 having an internal camera is used to capture image data of an object 510. In an embodiment, the smart phone may have software for processing the image data to extract digital fingerprints. In some embodiments, the smart phone may transmit image data over a network 504 (ethernet, internet, for example) to another processor. It may transmit raw image data or processed digital fingerprints to the authentication server 110. In an embodiment, the smart phone has software to request authentication services, and receive authentication results, for example, via the user interface 140 of the authentication server 110 and the user interface of the smartphone. Thus, the authentication processes described above may be conducted at virtually any location. One use case may be where the physical object is difficult or impossible to move, or where it may not be moved due to practical, contractual, or regulatory restrictions.

To be able to authenticate the additive manufactured product/object, one or more suitable digital fingerprints of an object may be acquired and the object (actually some description of it) and corresponding fingerprint may be stored or "registered" in a database. For example, in some embodiments, the fingerprint may comprise one or more feature vectors. The database should be secure. In some embodiments, a unique ID also may be assigned to an object. An ID may be a convenient index in some applications. However, it is not essential, as a digital fingerprint itself can serve as a key for searching a database. In other words, by identifying an object by the unique features and characteristics of the object itself (including the characteristics of the surface), arbitrary identifiers, labels, tags, etc. are unnecessary and, as noted, inherently unreliable.

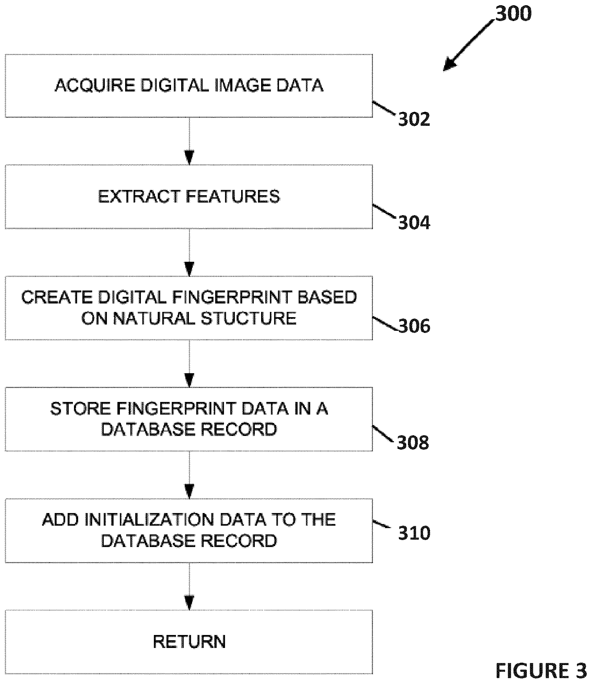

FIG. 3 is a simplified flow diagram illustrating a method 300 for creating and storing or "registering" a digital fingerprint of an object in a database. The process in one embodiment includes acquiring a digital image of the object, block 302, as discussed above. A variety of image capture technologies and devices may be used as noted. Next, features are extracted, block 304, from the digital image data. As explained, specific features or regions of interest (authentication regions) may be selected in support of subsequent identification or authentication of the object. The extracted features are analyzed and feature vectors are extracted to form a digital fingerprint--a digital file or record associated with the original image data, indicated at block 306. The digital fingerprint preferably may be stored in a database record at block 308. Other forms of searchable digital data storage should be deemed equivalents. Further, at block 310, initialization data should be added to the database record, or associated with it in a related table. This data is associated with the physical object that was scanned. For example, a description, manufacturer, model number, serial number, contents--a wide variety of data, selected as appropriate or useful depending on the type of object and this data may be known as metadata.

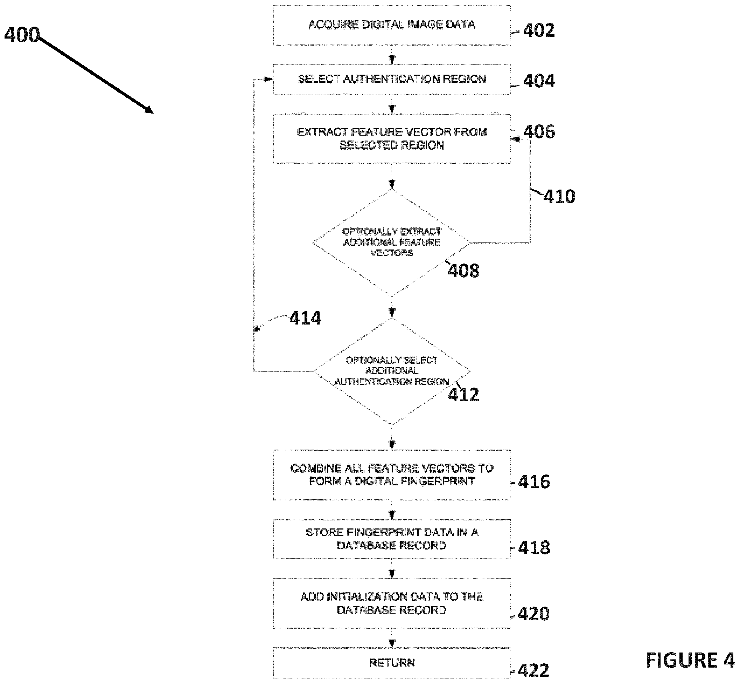

FIG. 4 illustrates a process 400 that includes more robust feature extraction. In this example, the method begins again with acquiring digital image data, block 402. The method may select at least one authentication region, block 404. This may be done by analysis of the image data, analysis of related image data, by reference to a predetermined template that defines at least one authentication region, or other means. The next block 406 calls for extracting a feature vector from the selected authentication region. A feature vector may be used to represent features of a region in a more compact form. For example, a feature vector may comprise an array of color or gray scale numeric values corresponding to areas within the selected authentication region. The values may each comprise a sum, average, maximum or other function of the individual values of a corresponding group of pixels forming a subpart of the region. In some applications, a feature vector may identify a location and shape of a distinctive aspect within a selected region. In decision 408, there may be additional feature vectors to be extracted from the same image data. In that case, the flow returns, path 410, to repeat the feature extraction step 406. This loop 410 may repeat until all desired feature vectors are collected. Optionally, there may be another authentication region to process in the same image data, see decision 412. In that case, the outer loop 414 is traversed back to block 404 for further feature extraction with respect to one or more additional authentication regions. Then some or all of the extracted feature vectors may be combined to form a digital fingerprint, block 416, which is then stored, block 418, along with related data, block 420, as mentioned above. The process returns or concludes at block 422.

A database of digital fingerprints can form the basis of a system to authenticate additive manufacturing parts/objects to detect counterfeits. An additive manufacturing parts authentication system based on digital fingerprinting has unique advantages and provides unique capabilities that are not available with traditional methods. For example, holograms, bar codes and serial numbers can all be duplicated with varying degrees of effort. This means that if the code or tag can be duplicated, then counterfeit objects or two objects with the same identifier can exist in the supply chain or distribution network. They can then be registered in a traditional track and trace system. All such systems rely on determining that the anti-counterfeit item (label, hologram, RFID tag) is legitimate, not that the item itself is.

Due to this weakness, track and trace systems based on traditional approaches like bar codes or serial numbers cannot prevent the resulting corruption of the system database. A counterfeit object may be mistakenly identified as genuine, and generate a false audit trail as it is tracked through the supply chain. Two or more objects with the same ID (one genuine, one or more counterfeit) may exist at the same time. Without physically examining the objects it is impossible to tell which item is genuine. Even if the objects can be physically inspected, determining which (if either) is authentic may require a subject matter expert. In the case of additive manufactured parts or gray market parts, even a subject matter expert may not be able to distinguish legitimate from counterfeit or unauthorized parts. Once identification is made as to which object is genuine, if such is even possible, the false trails must be removed from the database to restore integrity. This can be extremely difficult depending on the structure of the database and the complexity of the tracking data. In some cases the objects may not have any further contact with the track and trace system (for instance if they are purchased by a consumer), and the record will never be identified as false, leaving the database permanently corrupted.

In one embodiment of the Digital Fingerprinting Authentication System, an additive manufactured item may be scanned and identified at initial manufacture. Alternatively, an item may be scanned and identified at any subsequent time or location for entry into a tracking system. This point of identification preferably is done when the item is either in the possession of its manufacturer or has been transferred by secure means to the current holder so that its legitimacy at the point of identification is adequately established. Alternatively, an item may be identified or authenticated by a subject matter expert and scanned at that time for entry into a tracking system.

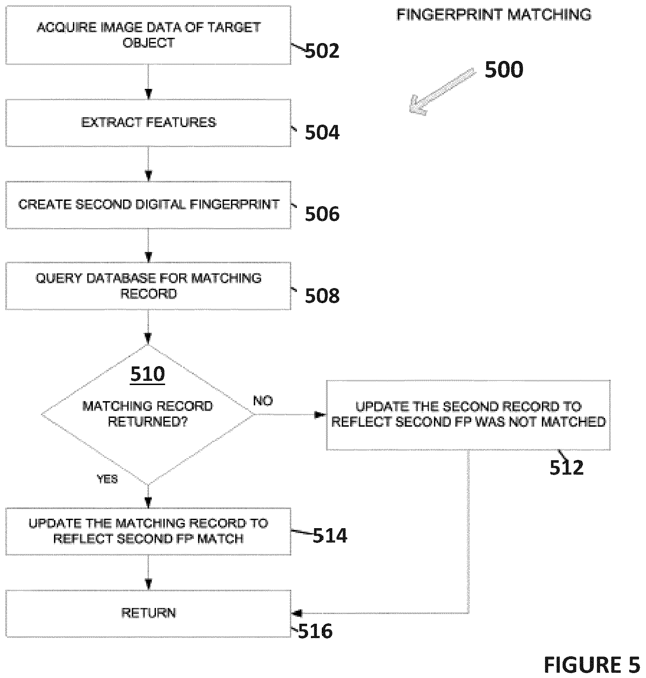

The system then identifies the object every time it is scanned again, typically at discrete steps in manufacturing, distribution, and sale. FIG. 5 is a simplified flow diagram illustrating a method 500 for matching a digital fingerprint of a target object to a database of existing digital fingerprints. This method and the methods above may be performed by the elements of the authentication server 110 in Figs. 1 and 2 and the digital fingerprinting processor 106 in Figs. 1 and 2 or may be performed using other computer systems and hardware that are within the scope of the disclosure.

The method acquires image data of a "target object" i.e., the object the method wants to identify or authenticate by finding a match in the database, see block 502. The method extracts features from the target object image data, block 504, as discussed above. Then we create a new (second) digital fingerprint based on the extracted features, block 506. The next step is querying the database, block 508, for a record that matches the second digital fingerprint record. "Matching" in this context may be relative to a threshold confidence level rather than a binary decision or to a match confidence level with some other object (e.g., identify an object as legitimate when it matches the reference of a legitimate object better (e.g., considerably better) than it matches any other object in the database). The requisite confidence level may vary depending on the specific application. The confidence level required may be varied dynamically responsive to the data and experience with a given system. If no "matching" record is returned, decision 510, update the second record (the digital fingerprint of the target object), block 512, to reflect that no match was found. If a match is returned, the matching record is updated to reflect the match, block 514 (for example, it may be linked to the second record). The results may be returned to the user. The process returns or concludes at block 516.

As mentioned earlier, a "scan" may refer to an image (or digital data that defines an image) captured by a scanner, a camera, a specially-adapted sensor array such as CCD array, a microscope, a smart phone camera, a video camera, an x-ray machine, etc. Broadly, any device that can sense and capture electromagnetic radiation (or any identifying information, e.g., sonar etc., that has traveled through an object, or reflected off of an object, is a candidate to create a "scan" of the object. It is critical to capture at least one native feature of the object, which may be of an original region of the object as distinguished from a region having a feature added to the object for identification, such as a label, bar code, RFID tag, serial number, etc. In some cases, the native feature may of a non-original region in which an object has been added to the physical object for identification (such as a label). The added object may be affixed (e.g., permanently affixed) to the physical object, such as through an adhesive in the case of a label. So long as the added object (e.g., the label) becomes an integral part of the physical object, we can scan the added object to obtain a digital fingerprint and use that digital fingerprint to track the physical object. In some embodiments, the digital fingerprint corresponds to an original region, a non-original region (corresponding to where an object has been added for the purpose of, for instance, identification of the physical object), or combinations thereof.

A "native feature" in this description may not be concerned with reading or recognizing meaningful content, even in the case where the digital fingerprint corresponds to a non-original region. For example, a label on a scanned object with a printed serial number may give rise to various features in fingerprint processing, some of which may become part of a digital fingerprint feature set or vector that is associated with the object. The features may refer to light and dark areas, locations, spacing, ink blobs, etc. This information may refer to the printed serial number on the label, but there is no effort to actually "read" or recognize the printed serial number (which may be bogus). Similarly, an RFID tag applied to an object may give rise to a fingerprint vector responsive to its appearance and location on the object. However, in some examples no effort is made to actually stimulate or "read" data or signals from the tag. In some embodiments we are not using the added object according to the tracking scheme from which it originated. The various features used in fingerprint processing, some or all of which may become part of a digital fingerprint set or vector that is associated with the physical object, may be extracted from a permanently affixed label (for the purposes presented here the contents of the label, e.g., the value of the serial number) may be irrelevant.

### "Accidental" Features in Additive Manufacturing

Consider the images of a piece of an additive manufactured part shown in Fig. 6A. The "intended" structures in the piece are the layers of added material (in this case extruded plastic). At the resolution of the part in Fig. 6A, it is clear that the layers have considerable randomness to them. In a magnified region 600 in Fig. 6A that is shown in Fig. 6B, it can be seen that, at scales considerably smaller, within the "intended" rows are features that appear completely random. These features, as well as the larger-scale irregularities, are candidate features for the digital fingerprinting authentication process taught in this disclosure. These candidate features of the AM part may be random, pseudo-random, or accidental features. Thus, the object made by AM has features that occur as a result of the manufacturing process but that are unintended and essentially impossible to duplicate by a counterfeiter. It is these features (native surface features due to the AM process) from which digital fingerprints may be captured that can uniquely identify the AM part as authentic since a counterfeiter cannot replicate those features.

Thus, the authentication system and method provide a way to assure the authenticity or identity of an object created or modified through an AM process using the innate (possibly unintended) features of the object generated by the manufacturing process. By using random accidental features which are inherently different for each object, the counterfeit proxy problem that plagues all forms of proxy authentication is bypassed and with no proxy, there can be no proxy counterfeiting. The existence of counterfeit AM parts has several major impacts on the marketplace such as lost revenue for the owner of the part design, loss of value and control due to oversupply, and danger to the end user from inferior parts. These problems, and more, are solved if, when the part is used, it can be guaranteed to have been manufactured under appropriate circumstances as can be done with the disclosed authentication system. Thus, the AM part authentication system improves existing authentication technology that cannot authenticate an AM part.

During the AM process, material is added to a substrate or to already-existing part surfaces. In general, there is a scale to the added material. This scale may be the width of a laser beam doing localized melting, the width of an extrusion jet, and so on. The surfaces so produced may be changed many times during manufacturing the object, either by adding additional (and often different) material, by machining the surface, by a combination of both, or by other means. The teachings of this disclosure apply between manufacturing states where a surface is added and when the surface is no longer accessible (because it has been covered, machined or etched away, or worn away). They also apply after the part is complete and the AM part authentication is able to uniquely identify the AM part in a way that is almost impossible for a would-be counterfeiter to duplicate.

In one embodiment, an item is created through AM and successive layers of different kinds of material are added during the process. Before it is complete, the item may be sent to another facility to be worked on. Before leaving its current station, portions of the object are digitally fingerprinted and stored along with identifying information in a database. The next station can then authenticate that it has received the proper part. After doing whatever is required (which can include machining the surface away completely, adding new material, incorporating the item as a component in another item, and so on), the part is re-inducted and then sent to the next stage in the manufacturing process.

If the object goes back to a previous manufacturing location, and if the entire surface has not been removed in the meanwhile, the object can be authenticated at that stage using the surface portions that have not been removed. This process of adding and machining can be repeated many times before the item is finished. At that point, it can be inducted again, and its digital fingerprint added to a database. This final induction of its digital fingerprint can be used by users who receive the part (an installation facility, a repair facility, a customer) to authenticate the part by capturing another digital fingerprint and comparing it with the records in the database. Similarly, if knowledge of an inducted item's provenance is lost (for example, if the item is lost or stolen and then recovered) the same digital fingerprinting process can be used to determine which object it is.

The AM part authenticating system and method may also be used to determine where AM might be used to repair manufacturing errors or wear on an object. This can be coupled (or not) with detecting the wear and tear in the first place. In a further embodiment the taught techniques can be used to detect differences in color, shape, or other features that are outside the spec of the additive manufacturing process or that might indicate a counterfeit object.

The foregoing description, for purpose of explanation, has been with reference to specific embodiments. However, the illustrative discussions above are not intended to be exhaustive or to limit the disclosure to the precise forms disclosed. Many modifications and variations are possible in view of the above teachings. The embodiments were chosen and described in order to best explain the principles of the disclosure and its practical applications, to thereby enable others skilled in the art to best utilize the disclosure and various embodiments with various modifications as are suited to the particular use contemplated.

The system and method disclosed herein may be implemented via one or more components, systems, servers, appliances, other subcomponents, or distributed among such elements. When implemented as a system, such systems may include and/or involve, inter alia, components such as software modules, general-purpose CPU, RAM, etc. found in general-purpose computers. In implementations where the innovations reside on a server, such a server may include or involve components such as CPU, RAM, etc., such as those found in general-purpose computers.

Additionally, the system and method herein may be achieved via implementations with disparate or entirely different software, hardware and/or firmware components, beyond that set forth above. With regard to such other components (e.g., software, processing components, etc.) and/or computer-readable media associated with or embodying the present inventions, for example, aspects of the innovations herein may be implemented consistent with numerous general purpose or special purpose computing systems or configurations. Various exemplary computing systems, environments, and/or configurations that may be suitable for use with the innovations herein may include, but are not limited to: software or other components within or embodied on personal computers, servers or server computing devices such as routing/connectivity components, hand-held or laptop devices, multiprocessor systems, microprocessor-based systems, set top boxes, consumer electronic devices, network PCs, other existing computer platforms, distributed computing environments that include one or more of the above systems or devices, etc.

In some instances, aspects of the system and method may be achieved via or performed by logic and/or logic instructions including program modules, executed in association with such components or circuitry, for example. In general, program modules may include routines, programs, objects, components, data structures, etc. that perform particular tasks or implement particular instructions herein. The inventions may also be practiced in the context of distributed software, computer, or circuit settings where circuitry is connected via communication buses, circuitry or links. In distributed settings, control/instructions may occur from both local and remote computer storage media including memory storage devices.

The software, circuitry and components herein may also include and/or utilize one or more types of computer readable media. Computer readable media can be any available media that is resident on, associable with, or can be accessed by such circuits and/or computing components. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical storage, magnetic tape, magnetic disk storage or other magnetic storage devices, or any other medium which can be used to store the desired information and can accessed by computing component. Communication media may comprise computer readable instructions, data structures, program modules and/or other components. Further, communication media may include wired media such as a wired network or direct-wired connection, however no media of any such type herein includes transitory media. Combinations of the any of the above are also included within the scope of computer readable media.

In the present description, the terms component, module, device, etc. may refer to any type of logical or functional software elements, circuits, blocks and/or processes that may be implemented in a variety of ways. For example, the functions of various circuits and/or blocks can be combined with one another into any other number of modules. Each module may even be implemented as a software program stored on a tangible memory (e.g., random access memory, read only memory, CD-ROM memory, hard disk drive, etc.) to be read by a central processing unit to implement the functions of the innovations herein. Or, the modules can comprise programming instructions transmitted to a general-purpose computer or to processing/graphics hardware via a transmission carrier wave. Also, the modules can be implemented as hardware logic circuitry implementing the functions encompassed by the innovations herein. Finally, the modules can be implemented using special purpose instructions (SIMD instructions), field programmable logic arrays or any mix thereof which provides the desired level performance and cost.

As disclosed herein, features consistent with the disclosure may be implemented via computer-hardware, software, and/or firmware. For example, the systems and methods disclosed herein may be embodied in various forms including, for example, a data processor, such as a computer that also includes a database, digital electronic circuitry, firmware, software, or in combinations of them. Further, while some of the disclosed implementations describe specific hardware components, systems and methods consistent with the innovations herein may be implemented with any combination of hardware, software and/or firmware. Moreover, the above-noted features and other aspects and principles of the innovations herein may be implemented in various environments. Such environments and related applications may be specially constructed for performing the various routines, processes and/or operations according to the invention or they may include a general-purpose computer or computing platform selectively activated or reconfigured by code to provide the necessary functionality. The processes disclosed herein are not inherently related to any particular computer, network, architecture, environment, or other apparatus, and may be implemented by a suitable combination of hardware, software, and/or firmware. For example, various general-purpose machines may be used with programs written in accordance with teachings of the invention, or it may be more convenient to construct a specialized apparatus or system to perform the required methods and techniques.

Aspects of the method and system described herein, such as the logic, may also be implemented as functionality programmed into any of a variety of circuitry, including programmable logic devices ("PLDs"), such as field programmable gate arrays ("FPGAs"), programmable array logic ("PAL.") devices, electrically programmable logic and memory devices and standard cell-based devices, as well as application specific integrated circuits. Some other possibilities for implementing aspects include: memory devices, microcontrollers with memory (such as EEPROM), embedded microprocessors, firmware, software, etc. Furthermore, aspects may be embodied in microprocessors having software-based circuit emulation, discrete logic (sequential and combinatorial), custom devices, fuzzy (neural) logic, quantum devices, and hybrids of any of the above device types. The underlying device technologies may be provided in a variety of component types, e.g., metal-oxide semiconductor field-effect transistor ("MOSFET") technologies like complementary metal-oxide semiconductor ("CMOS"), bipolar technologies like emitter-coupled logic ("ECL"), polymer technologies (e.g., silicon-conjugated polymer and metal-conjugated polymer-metal structures), mixed analog and digital, and so on.

It should also be noted that the various logic and/or functions disclosed herein may be enabled using any number of combinations of hardware, firmware, and/or as data and/or instructions embodied in various machine-readable or computer-readable media, in terms of their behavioral, register transfer, logic component, and/or other characteristics. Computer-readable media in which such formatted data and/or instructions may be embodied include, but are not limited to, non-volatile storage media in various forms (e.g., optical, magnetic or semiconductor storage media) though again does not include transitory media. Unless the context clearly requires otherwise, throughout the description, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole and not to any particular portions of this application. When the word "or" is used in reference to a list of two or more items, that word covers all of the following interpretations of the word: any of the items in the list, all of the items in the list and any combination of the items in the list.

### Enumerated Example Embodiments

Further examples of embodiments of the present invention are defined, without limitation, by the following Enumerated Example Embodiments (EEEs):
EEE 1: A method, comprising: providing a database system having a processor and a data store; storing, in the data store of the database system, a first digital fingerprint of a first physical object made by an additive manufacturing process, the first digital fingerprint based on first digital image data of at least a portion of a surface of the first physical object, wherein the first digital fingerprint identifies features resulting from the additive manufacturing process: receiving a target digital fingerprint, wherein the target digital fingerprint is based on second digital image data of at least a portion of a surface of a target physical object, wherein the target digital fingerprint identifies features resulting from an additive manufacturing process used to make the target physical object; querying the data store based on the target digital fingerprint to identify a stored digital fingerprint that matches the target digital fingerprint within a predetermined similarity threshold; and, in the database system, responsive to identifying a stored digital fingerprint that matches the target digital fingerprint within the predetermined similarity threshold, generating an output that indicates that the target physical object is the first physical object.
EEE 2: The method of EEE 1, wherein the features of the additive manufacturing are one or more of a random feature, a pseudo-random feature, and an accidental feature resulting from the additive manufacturing process.
EEE 3: A method comprising: scanning a first object created by an additive manufacturing process to generate first image data; processing the first image data to form a digital fingerprint of the first object, so that the digital fingerprint identifies the features resulting from the manufacture of the first object; and storing the digital fingerprint in a database record associated with the first object for later identification or authentication of the first object.
EEE 4: The method of EEE 3, wherein scanning the first object comprises scanning at least a portion of an exterior surface of the first object.
EEE 5: The method of EEE 3 or EEE 4, wherein scanning the first object comprises scanning at least a portion of the interior of the first object.
EEE 6: The method of any of EEEs 3-5, further comprising scanning a target object to generate second image data, wherein the target object is associated with the first object; processing the second image data to form a digital fingerprint of the target object, comparing the digital fingerprint of the target object to the digital fingerprint of the first object to determine a result; and transmitting the result to a memory or interface.
EEE 7: The method of EEE 6, wherein the result indicates whether the target object is the first object.
EEE 8: The method of EEE 6, wherein the result indicates whether the target object is the first object modified by an expected change.
EEE 9: The method of EEE 6, wherein the result indicates whether the target object is the first object modified by an unexpected change.
EEE 10: The method of EEE 6, wherein the result indicates whether the target object is the first object modified by wear and tear on the first object.
EEE 11: The method of any of EEEs 3-10, wherein the features of the additive manufacturing are one or more of a random feature, a pseudo-random feature and an accidental feature resulting from the additive manufacturing process.
EEE 12: A method comprising: creating an object using an additive manufacturing process; before the object is completed, generating a digital fingerprint of the incomplete object that identifies features of the surface of the object resulting from the additive manufacturing process; storing the digital fingerprint of the incomplete object along with identifying information in a database; transferring the incomplete object to a second facility; at the second facility, generating a digital fingerprint of the received incomplete object that identifies features of the surface of the object resulting from the additive manufacturing process and changes that occurred during transfer of the incomplete object to the second facility; and authenticating the received incomplete object by comparing the digital fingerprint of the received incomplete object to the digital fingerprint stored in the database.
EEE 13: The method of EEE 12 and further comprising: processing, at the second facility, the received incomplete object; inducting the processed object into the database and transferring the processed object to a next stage in the manufacturing process.
EEE 14: The method of EEE 12 or EEE 13, wherein the processing of the received incomplete object comprises at least one of machining the surface away completely, adding new material, and incorporating the object as a component in another item.
EEE 15: The method of and of EEEs 12-14, wherein the additive manufacturing process further comprises using a 3D printer.
EEE 16: A manufacturing system, comprising: a machine that creates an object using an additive manufacturing process; an authentication system adjacent the additive manufacturing machine having a scanner, a digital fingerprint extraction system and a database wherein the scanner captures a digital image of a surface of the object during manufacture, a digital fingerprint extraction system that generates a digital fingerprint of the incomplete object that identifies features of the surface of the object resulting from the additive manufacturing process, and the database stores the digital fingerprint of the incomplete object along with identifying information; a second manufacturing facility wherein the incomplete object is transferred to the second manufacturing facility, the second manufacturing facility having a scanner and a digital fingerprint extraction system connected to the authentication system that generates a digital fingerprint of the received incomplete object that identifies features of the surface of the object resulting from the additive manufacturing process and changes that occurred during transfer of the incomplete object to the second facility and authenticates the received incomplete object by comparing the digital fingerprint of the received incomplete object to the digital fingerprint stored in the database.
EEE 17: The system of EEE 16, wherein the additive manufacturing machine is a 3D printer.

Although certain presently preferred implementations of the invention have been specifically described herein, it will be apparent to those skilled in the art to which the invention pertains that variations and modifications of the various implementations shown and described herein may be made without departing from the spirit and scope of the invention. Accordingly, it is intended that the invention be limited only to the extent required by the applicable rules of law.

While the foregoing has been with reference to a particular embodiment of the disclosure, it will be appreciated by those skilled in the art that changes in this embodiment may be made without departing from the principles and spirit of the disclosure, the scope of which is defined by the appended claims.

## Claims

1. A method, comprising:
providing a database system having a processor and a data store;
storing, in the data store of the database system, a first digital fingerprint of a first physical object made by an additive manufacturing process, the first digital fingerprint based on first digital image data of at least a portion of a surface of the first physical object, wherein the first digital fingerprint identifies features resulting from the additive manufacturing process;
receiving a target digital fingerprint, wherein the target digital fingerprint is based on second digital image data of at least a portion of a surface of a target physical object, wherein the target digital fingerprint identifies features resulting from an additive manufacturing process used to make the target physical object;
querying the data store based on the target digital fingerprint to identify a stored digital fingerprint that matches the target digital fingerprint within a predetermined similarity threshold; and
in the database system, responsive to identifying a stored digital fingerprint that matches the target digital fingerprint within the predetermined similarity threshold, generating an output that indicates that the target physical object is the first physical object.

2. The method of claim 1, further comprising:
scanning the first object created by the additive manufacturing process to generate the first image data;
processing the first image data to form the first digital fingerprint of the first object, so that the first digital fingerprint identifies the features resulting from the manufacture of the first object; and
wherein storing the first digital fingerprint of the first physical object made by the additive manufacturing process in the data store of the database system comprises storing the first digital fingerprint in a database record associated with the first object for later identification or authentication of the first object.

3. The method of claim 2, wherein scanning the first object comprises scanning at least a portion of an exterior surface of the first object.

4. The method of claim 2 or claim 3, wherein scanning the first object comprises scanning at least a portion of an interior of the first object.

5. The method of any of claims 2-4, further comprising scanning the target object to generate the second image data, wherein the target object is associated with the first object; processing the second image data to form the target digital fingerprint of the target object, and wherein querying the data store based on the target digital fingerprint to identify a stored digital fingerprint that matches the target digital fingerprint within a predetermined similarity threshold comprises comparing the digital fingerprint of the target object to the first digital fingerprint of the first object to determine a result; and transmitting the result to a memory or interface.

6. The method of claim 5, wherein the result indicates whether the target object is the first object.

7. The method of claim 5, wherein the result indicates whether the target object is the first object modified by an expected change.

8. The method of claim 5, wherein the result indicates whether the target object is the first object modified by an unexpected change.

9. The method of claim 5, wherein the result indicates whether the target object is the first object modified by wear and tear on the first object.

10. The method of any of claims 1-9, wherein the features of the additive manufacturing are one or more of a random feature, a pseudo-random feature and an accidental feature resulting from the additive manufacturing process.

11. A manufacturing system, comprising:
a machine that creates an object using an additive manufacturing process;
an authentication system adjacent the additive manufacturing machine having a scanner, a digital fingerprint extraction system and a database wherein the scanner captures a digital image of a surface of the object during manufacture, a digital fingerprint extraction system that generates a digital fingerprint of the incomplete object that identifies features of the surface of the object resulting from the additive manufacturing process, and the database stores the digital fingerprint of the incomplete object along with identifying information;
a second manufacturing facility wherein the incomplete object is transferred to the second manufacturing facility, the second manufacturing facility having a scanner and a digital fingerprint extraction system connected to the authentication system that generates a digital fingerprint of the received incomplete object that identifies features of the surface of the object resulting from the additive manufacturing process and changes that occurred during transfer of the incomplete object to the second facility and authenticates the received incomplete object by comparing the digital fingerprint of the received incomplete object to the digital fingerprint stored in the database.

12. The system of claim 11, wherein the additive manufacturing machine is a 3D printer.

13. The system of claim 11 or claim 12, wherein to authenticate the received incomplete object the authentication system indicates whether the target object is the first object modified by an expected change.

14. The system of any of claims 11-13, wherein to authenticate the received incomplete object the authentication system indicates whether the target object is the first object modified by an unexpected change.
